# FASCICULE DE BREVET EUROPEEN

(11) **EP 4 237 808 B1**
(45) Date de publication et mention de la délivrance du brevet: **04.12.2024**
(21) Numéro de dépôt: 21798333.7
(22) Date de dépôt: 20.10.2021
(51) Int. Cl.: G01K 1/14, G01K 13/02, G01K 13/024, C01B 3/38

(54) **SYSTÈME DE MESURE DE TEMPÉRATURE DU GAZ DE SYNTHÈSE EN SORTIE DE TUBE DE REFORMAGE**
SYSTEM ZUR MESSUNG DER TEMPERATUR DES AUS EINEM REFORMIERUNGSROHR AUSTRETENDEN SYNGASES
SYSTEM FOR MEASURING THE TEMPERATURE OF THE SYNGAS LEAVING A REFORMING TUBE

(30) Priorité: 28.10.2020 FR 2011036
(43) Date de publication de la demande: 06.09.2023
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: LODIER, Guillaume, 78350 LES LOGES-EN-JOSAS (FR); TUDORACHE, Diana, 78350 LES LOGES-EN-JOSAS (FR); GARY, Daniel, 78350 LES LOGES-EN-JOSAS (FR); HSU, Antoine, 94503 CHAMPIGNY-SUR-MARNE (FR)
(74) Mandataire: Air Liquide
(86) Numéro de dépôt international: PCT/EP2021/079032
(87) Numéro de publication internationale: WO 2022/090009

(56) Documents cités:
- WO-A1-2008/087306
- FR-A1- 2 888 920
- US-A1- 2020 256 743

## Description

L'invention concerne le domaine de la production de gaz de synthèse par reformage à la vapeur.

La présente invention concerne plus particulièrement un système pour mesurer des températures spécifiques des tubes de reformage présents dans un four de reformage à la vapeur.

Les fours de reformage de méthane à la vapeur (SMR) sont utilisés pour la production d'hydrogène, de monoxyde de carbone et de gaz de synthèse. Les réactions de reformage de la charge hydrocarbonée sont endothermiques, elles nécessitent une grande quantité de chaleur.

Le four de reformage (ou reformeur), le plus souvent une construction de forme parallélépipédique, est réalisé avec des éléments en briques céramiques, il dispose de sources de chaleur sous la forme de brûleurs généralement alignés, implantés le plus souvent sur les parois latérales verticales (technologie plus connue selon sa dénomination anglaise side-fired ) ou horizontalement sur le plafond ou la sole du four (technologies top-fired et bottom-fired respectivement). Des tubes catalytiques sont disposés verticalement, en rangées dans la chambre de combustion du four; les réactions de reformage ont lieu dans ces tubes catalytiques qui sont dimensionnés en longueur, en diamètre et en épaisseur de paroi pour permettre aux réactions d'être complètes en visant une efficacité de procédé proche de l'équilibre thermodynamique. Dans un four donné, ces tubes ont des dimensions uniformes (typiquement de l'ordre de 12 m de hauteur, 10 à 13 cm de diamètre interne, avec des parois de 1 à 1,8 cm d'épaisseur).

Les tubes de reformage d'une même rangée sont connectés en sortie à un tuyau collecteur unique qui récupère le syngas produit par les tubes. De façon classique le gaz reformé sort à l'extrémité basse des tubes de reformage, ce tuyau, appelé "collecteur longitudinal" (aussi appelé "outlet collecter" en langue anglaise) dans la suite du texte est placé longitudinalement en dessous de la rangée de tubes. Le collecteur longitudinal est lui-même relié à un collecteur transversal (aussi appelé "cross header" en langue anglaise) qui récupère le syngas provenant de l'ensemble des collecteurs longitudinaux reliés aux différentes rangées de tubes, collectant ainsi la totalité du syngas produit dans le four de reformage.

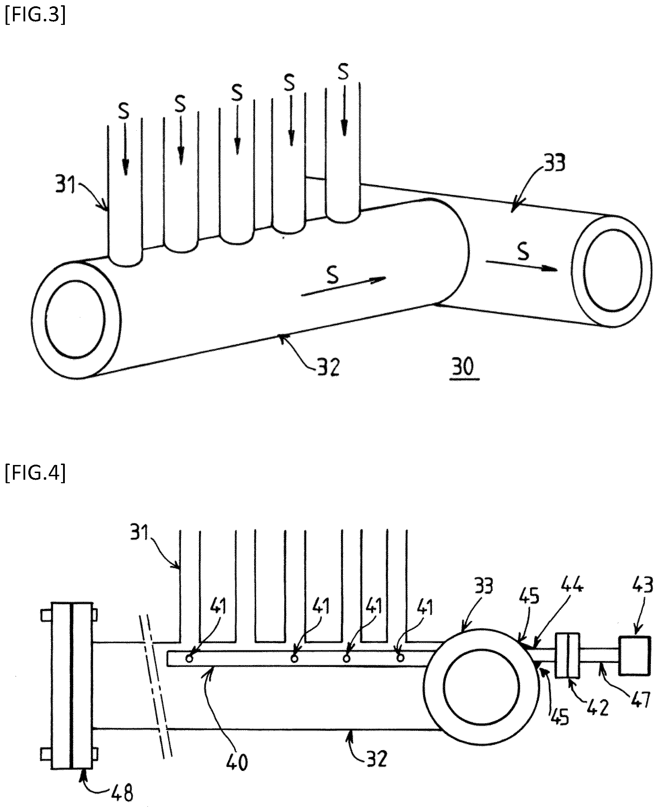

Dans la configuration telle qu'illustrée dans [Fig. 3], le collecteur transversal est disposé dans le même plan horizontal que les collecteurs longitudinaux, perpendiculairement à ceux-ci; il est connecté aux collecteurs au niveau d'une extrémité, chaque collecteur longitudinal a donc une extrémité débouchant dans le collecteur transversal, l'autre extrémité étant fermée. Selon une autre configuration, le collecteur transversal peut être disposé en-dessous des collecteurs longitudinaux dans un plan parallèle à celui desdits collecteurs auxquels il est relié dans leur partie centrale; chaque collecteur longitudinal est fermé à ses extrémités, les deux parties du collecteur longitudinal situées de part et de l'autre du collecteur transversal débouchent donc dans celui-ci par une sortie commune.

Dans le four le transfert de chaleur entre les flammes des brûleurs et l'intérieur des tubes de reformage joue un rôle de premier ordre dans l'efficacité du procédé, et même si les fours de SMR sont conçus de sorte à assurer le transfert thermique le plus homogène possible entre les flammes et les tubes, la fabrication des fours et des différences dans le remplissage des tubes peuvent amener à une dispersion (spread en langue anglaise) des températures entre les tubes ayant pour effet de réduire l'efficacité du procédé de reformage.

Dès lors qu'on peut estimer la dispersion des températures entre les différents tubes, on peut la réduire; des solutions curatives pour cela existent, soit en agissant sur la puissance des brûleurs indépendamment les uns des autres, soit en ajustant le débit de gaz de charge alimentant chaque tube de reformage.

WO2008087306 décrit un système pour mesurer une température spécifique dans un four de reformage de méthane à la vapeur dans lequel des tubes de reformage disposés verticalement en rangées sont alimentés en entrée en mélange gazeux réactionnel et produisent en sortie de tube un gaz de synthèse. Chaque tube est raccordé à son extrémité inférieure à un collecteur qui collecte le gaz de synthèse.

FR2 888 920 A1 décrit un four de reformage catalytique d'un mélange réactionnel d'hydrocarbures, comprenant au moins un tube de catalyseur dont on suit la température.

US2020/256743 A1 décrit des sondes de température avec plusieurs éléments sensibles.

Cependant, quelle que soit la méthode curative employée, son efficacité reste conditionnée par la mise à disposition de températures fiables de qualité.

De façon classique, pour acquérir ces températures, on réalise dans l'enceinte du four une mesure de la température des parois des tubes de reformage sur l'extérieur des tubes, dite température de peau. Cette température peut être obtenue en utilisant par exemple:
- un pyromètre, ou
- une caméra infrarouge (IR) fonctionnant par exemple à la longueur d'onde de 3.1 µm, ou
- en soudant sur le tube des thermocouples de contact à différentes élévations du tube. mais faire cette mesure dans la chambre de combustion, en milieu hostile et à une température élevée de l'ordre de 1200°C est difficile.

Il est aussi possible de mesurer la température à l'intérieur des tubes, mais cette mesure est délicate à mettre en oeuvre: le système de mesure installé va modifier l'empilement du catalyseur, entraînant des passages préférentiels et donc localement de points chauds, et par ailleurs, l'installation elle-même du système dans un four chauffé par le haut dont les tubes de reformage sont aussi alimentés en charge gazeuse par le haut est délicate.

Il y a donc un besoin d'un moyen qui permette de mesurer une température représentative de chaque tube de reformage individuellement, sans que la mesure se fasse à l'intérieur du tube de reformage, ou dans l'enceinte du four à l'extérieur du tube.

Les inventeurs ont découvert que le comportement du gaz de synthèse dans le collecteur longitudinal à proximité de la sortie d'un tube de reformage - en particulier le fait qu'il ne se mélange pas immédiatement avec le gaz de synthèse issu des tubes voisins et/ou circulant dans le collecteur longitudinal - rendait possible d'accéder à une température spécifique dudit tube, ceci quelque soit le tube, via une mesure de température de gaz de synthèse dans le collecteur longitudinal en sortie du tube.

L'invention a donc pour objet de réaliser dans le gaz de synthèse, dans le collecteur longitudinal au débouché des tubes de reformage, des mesures de température représentatives de la température du gaz de synthèse sortant du tube. Les mesures pourront être utilisés pour améliorer l'efficacité de la production de gaz de synthèse sans risque pour la sécurité de l'installation. Ces mesures réalisées au niveau du collecteur et représentatives de la température du syngas sortant de chaque tube individuellement pourraient en particulier mettre en évidence des différences de comportement des tubes entre eux, donc l'inhomogénéité du transfert de chaleur entre les tubes.

Pour cela, un premier aspect de l'invention concerne un système pour mesurer une température spécifique pour au moins un tube de reformage présent dans un four de reformage de méthane à la vapeur dans lequel des tubes de reformage disposés verticalement en rangées sont alimentés en entrée en mélange gazeux réactionnel et produisent en sortie de tube un gaz de synthèse, un ensemble de collecteurs tubulaires longitudinaux est disposé dans un plan perpendiculaire aux rangées de tubes, sous lesdites rangées, pour collecter le gaz de synthèse produit, les tubes d'une rangée donnée débouchant dans un collecteur longitudinal qui lui est associé, l'ensemble des collecteurs longitudinaux débouchant dans un collecteur transversal, l'ensemble des collecteurs, longitudinaux et le collecteur transversal formant le système de collecte du gaz de synthèse, le système étant caractérisé en ce qu'il comprend pour au moins une rangée de tubes:
- au moins un moyen de mesure d'au moins une température de gaz de synthèse en sortie de tube; le moyen étant disposé dans la longueur du collecteur associé à ladite rangée de tubes et comprenant au moins une première partie de forme tubulaire disposée dans la longueur dudit collecteur longitudinal et munie d'au moins un capteur de température pour acquérir des données de température, lequel capteur est positionné dans le gaz de synthèse au débouché d'un tube de reformage de la rangée dont on mesure la température du gaz de synthèse de sortie, une deuxième partie prolongeant la première partie apte à assurer le transfert des données de température acquises par le capteur vers l'extérieur du collecteur longitudinal, et jusqu'à la troisième partie, troisième partie comprenant une instrumentation pour calculer la température à partir des données acquises par la première partie du moyen et transférées par la deuxième partie du moyen,
- un moyen de positionnement du capteur de température dans le collecteur longitudinal assurant son positionnement dans le flux de gaz de synthèse au débouché du tube, avant son mélange avec le gaz de synthèse provenant des autres tubes débouchant dans le collecteur,
- un moyen étanche de sortie de la deuxième partie du moyen de mesure vers l'extérieur du système de collecte du gaz de synthèse.

Ainsi, le système de mesure permet de mesurer la température en sortie d'un tube, ou d'une pluralité de tubes de reformage d'une rangée grâce à un ensemble de capteurs de température positionnés avec précision à la sortie desdits tubes dans la rangée. On pourra équiper une rangée, plusieurs rangées ou l'ensemble des rangées de tubes dans le four; dans les rangées équipées, on pourra contrôler la température au niveau d'un tube, de plusieurs tubes ou de l'ensemble des tubes. Il sera ainsi possible d'avoir accès à l'ensemble des températures de gaz de synthèse en sortie de tous les tubes ou d'une sélection de tubes.

Outre les caractéristiques évoquées dans les paragraphes précédent, le système de mesure de température selon le premier aspect de l'invention peut présenter une ou plusieurs des caractéristiques complémentaires parmi les suivantes, considérées individuellement ou selon toutes les combinaisons techniquement possibles.

Selon un mode de réalisation non limitatif,
- pour au moins une rangée de tubes, le système comprend un ou plusieurs moyens de mesure dont la première partie est munie d'un capteur de température unique positionné au débouché d'un tube dont il mesure la température du gaz de synthèse de sortie à l'aide d'un moyen de positionnement dédié, dont la deuxième partie prolongeant la première partie et apte à assurer le transfert des données de température acquises par le capteur vers l'instrumentation dispose d'un moyen étanche de sortie vers l'extérieur du système de collecte du gaz de synthèse,
- le moyen de mesure disposé dans la longueur du collecteur longitudinal est un moyen de mesure multipoint comportant une pluralité de capteurs disposés le long de la première partie du moyen de mesure pour se placer au débouché des tubes dont on mesure la température du gaz de synthèse de sortie,
- le capteur mesurant la température de gaz de synthèse en sortie d'un tube de reformage est positionné dans le collecteur, dans l'axe du tube à son débouché dans le collecteur, à une distance maximale mesurée à partir du débouché du tube dans le collecteur, de deux fois le diamètre intérieur de tube mesuré à son débouché dans le collecteur,
- le positionnement des capteurs est assuré via une pluralité de moyens de fixation répartis le long de la première partie du moyen de mesure de température qui assurent la fixation d'ensemble du moyen de mesure au collecteur au niveau de sa première partie,
- les moyens de fixation assurant la fixation d'ensemble comprennent un élément support sur lequel repose le moyen de mesure et une pièce de positionnement reliée rigidement à l'élément support et à au moins un point fixe du collecteur ou d'un tube de reformage débouchant dans le collecteur,
- la pièce de positionnement est constituée d'une ou plusieurs pièces rigides qui relient l'élément support aux parois du collecteur assurent son centrage et son maintien en position,
- le moyen de fixation est positionné au niveau d'une sortie de tube aboutissant verticalement dans le collecteur, la pièce de positionnement étant constituée d'un axe rigide solidaire du tube à son extrémité supérieure, par fixation à la paroi intérieure du tube ou à un élément lui-même solidaire du tube par exemple à un support de catalyseur, et à son extrémité inférieure solidaire d'un élément support sur lequel repose le moyen de mesure,
- la deuxième partie du moyen de mesure sort vers l'extérieur du système de collecte du gaz de synthèse directement à partir d'une extrémité du collecteur longitudinal fermée par une bride, ladite bride étant munie du moyen étanche de sortie de la deuxième partie du moyen de mesure vers l'extérieur du système de collecte du gaz de synthèse,
- la deuxième partie du moyen de mesure sort vers l'extérieur du système de collecte du gaz de synthèse en passant par le collecteur transversal relié au collecteur longitudinal et en traversant la paroi du collecteur transversal, ladite paroi étant munie pour cette traversée d'un moyen étanche de sortie de la deuxième partie du moyen de mesure vers l'extérieur du système de collecte du gaz de synthèse,
- le moyen de mesure de température est du type fibre optique muni de réseaux de Bragg,
- le moyen de mesure est du type thermocouple multipoint.

Un deuxième aspect de l'invention concerne une méthode pour mesurer une température spécifique pour au moins un tube de reformage mettant en oeuvre un quelconque des systèmes de mesure de température tel qu'évoqué dans les paragraphes précédents, selon laquelle on mesure ladite température spécifique d'au moins un tube de reformage d'au moins une rangée de tubes présents dans un four de reformage de méthane à la vapeur dans lequel on alimente en hydrocarbure gazeux et vapeur d'eau des tubes de reformage disposés verticalement en rangées et on récupère en sortie basse des tubes ledit gaz de synthèse, on collecte le gaz de synthèse dans un collecteur longitudinal disposé sous la rangée de tubes qui lui est associé, l'ensemble des collecteurs longitudinaux débouchant dans un collecteur transversal, caractérisée en ce que pour au moins un tube d'au moins une rangée de tubes, on mesure la température de gaz de synthèse en sortie de tube en mettant en oeuvre au moins:
- un moyen de mesure disposé dans la longueur du collecteur associé à ladite rangée de tubes, lequel moyen comprend au moins une première partie de forme tubulaire disposée dans la longueur dudit collecteur longitudinal et munie d'au moins un capteur de température pour acquérir des données de température, lequel capteur est positionné dans le gaz de synthèse au débouché d'un tube de reformage de la rangée dont on mesure la température du gaz de synthèse de sortie, une deuxième partie prolongeant la première partie apte à assurer le transfert des données de température acquises par le capteur vers l'extérieur du collecteur longitudinal, et jusqu'à la troisième partie, troisième partie comprenant une instrumentation pour calculer la température à partir des données acquises par la première partie du moyen et transférées par la deuxième partie du moyen,
- un moyen de positionnement du capteur de température dans le collecteur longitudinal assurant son positionnement dans le flux de gaz de synthèse au débouché du tube, avant son mélange avec le gaz de synthèse provenant des autres tubes débouchant dans le collecteur,
- un moyen étanche de sortie de la deuxième partie du moyen de mesure vers l'extérieur du système de collecte du gaz de synthèse.

L'invention sera mieux comprise à la lecture de la description qui suit et à l'examen des figures qui l'accompagnent qui sont présentées à titre indicatif, et nullement limitatif de l'invention.
[Fig. 1] montre une représentation schématique d'un thermocouple multipoint.
[Fig. 2] montre une représentation schématique d'une fibre optique à réseaux de Bragg.
[Fig. 3] est une représentation schématique tridimensionnelle d'un exemple de système de collecte de syngas produit par une rangée d tubes de reformage.
[Fig. 4] est une représentation schématique latérale du système de collecte de syngas de la figure précédente équipé d'un système de mesure de température de type multipoint selon l'invention.
[Fig. 5] est une représentation schématique d'une simulation de comportement du syngas en sortie des tubes d'une rangée.
[Fig. 6] regroupe des exemples (a, b) de représentation schématique de fixation de capteurs de température dans le collecteur au débouché des tubes de reformage.

Les figures sont maintenant présentées de manière détaillée, sauf indication contraire un même élément apparaissant sur des figures différentes présente une référence unique.

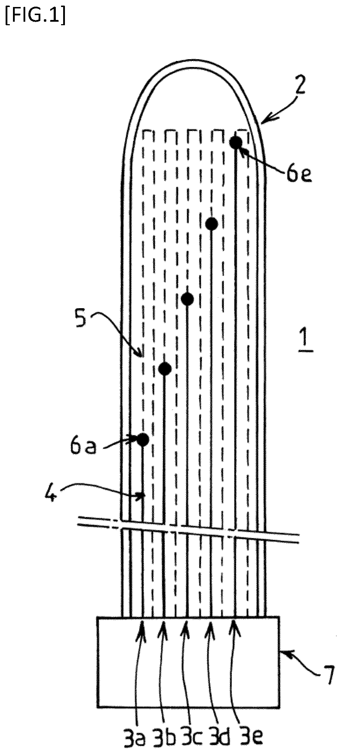

La figure 1 illustre un thermocouple multipoint 1, lequel se présente sous la forme d'un fourreau global comprenant une enveloppe 2 en alliage métallique réfractaire résistant aux conditions environnantes (haute température, corrosion), de type Inconel^{®} par exemple, dont une extrémité est fermée, l'extrémité opposée étant ouverte, délimitant un espace intérieur dans lequel seront logés une pluralité de thermocouples (cinq dans l'exemple présenté sur la figure, référencés 3a, 3b,.., 3e), chaque thermocouple étant constitué d'une paire de conducteurs métalliques (référencés pour le thermocouple 3a): un premier conducteur 4 représenté par une ligne continue et un second conducteur 5 représenté par une ligne discontinue, les deux conducteurs étant constitués de matériaux de conductivités électriques différentes et reliés en un point appelé point de j onction (référencé 6a sur la figure pour le thermocouple 3a et 6e pour le thermocouple 3e). L'espace entre les thermocouples est avantageusement comblé par un matériau d'isolation du type oxyde inorganique, par exemple MgO. Un système multipoint tel que présenté fonctionne selon le principe suivant: pour chaque thermocouple (3a,..., 3e), pour chaque paire de conducteurs, le point de jonction (soit 6a,..., 6e) constitue le capteur de température. Pour chaque thermocouple du système de mesure, les informations reçues par le capteur seront transmises le long des conducteurs jusqu'à l'extrémité ouverte de l'enveloppe 2 où les paires de conducteurs sont reliées à une instrumentation 7 (par exemple un voltmètre qui pour chacun des thermocouples mesure la différence de potentiel créée au niveau du capteur à la jonction entre les 2 métaux; couplé à un convertisseur il permet de calculer la température correspondante). Le système de mesure multipoint est conçu et les thermocouples sont disposés dans le fourreau de façon à ce que lors de l'installation du système dans le collecteur, les capteurs (6a à 6e dans l'exemple de la figure) soient placés aux positions longitudinales précises le long de l'enveloppe métallique 2 correspondant aux positions prédéfinies pour les mesures de température à réaliser. Le nombre de paires de conducteurs est choisi en fonction des besoins (cinq est ici donné simplement à titre illustratif). Le nombre de tubes à équiper est compris entre un et le nombre total de tubes dans la rangée. Le diamètre de l'enveloppe 2 sera fonction du nombre des thermocouples contenus, un chemisage d'un quart de pouce (6,35 mm) de diamètre extérieur pouvant contenir jusqu'à 16 thermocouples.

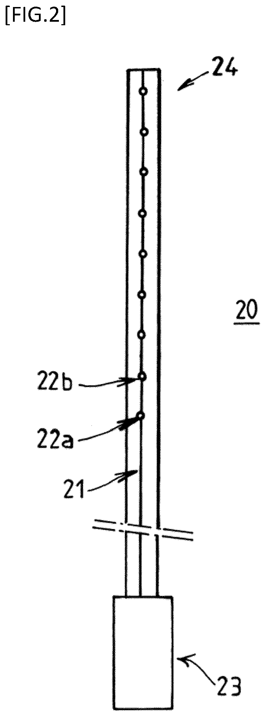

La figure 2 illustre un système 20 de mesure de température multipoint de type fibre optique à réseaux de Bragg comprenant une fibre optique 21 très fine (diamètre de l'ordre de 0.1 mm) au sein de laquelle sont inscrits des réseaux de Bragg (22a, 22b, ...) faisant office de points de mesure. A chaque réseau de Bragg est associée une longueur d'onde, typiquement dans la gamme 1400-1700 nm. Les réseaux de Bragg sont multiplexés en longueur d'onde et peuvent être interrogés simultanément par une instrumentation 23 de type interrogateur. L'ensemble fibre optique et réseaux de Bragg est protégé dans une enveloppe métallique 24, résistant aux conditions sévères (températures jusqu'à 950°C, pression autour de 30 bar et composition typique d'un syngas avec principalement de l'H₂, CO et des résidus). L'intérêt principal d'un système de mesure de température multipoint de type fibre optique munie de réseaux de Bragg réside dans son très faible encombrement indépendant du nombre de réseaux inscrits dans la fibre.

La figure 3 illustre un dispositif de collecte 30 du gaz de synthèse (syngas) S produit dans les tubes de reformage 31 d'une rangée de tubes d'un reformeur SMR. Seuls une rangée de tubes et un collecteur longitudinal 32 sont représentés sur la figure; dans la pratique, le nombre de collecteurs longitudinaux correspond au nombre de rangées de tubes dans le four. Chaque sortie de tube débouche dans le collecteur longitudinal 32 qui collecte ainsi la totalité du syngas S produit par les tubes de la rangée. Le raccordement des tubes au collecteur 32 se fait, soit directement, soit par l'intermédiaire d'une pièce de raccordement. La pièce de raccordement peut présenter des formes différentes, elle peut être rectiligne et dans ce cas aboutir à la verticale dans le collecteur longitudinal (comme sur la figure), ou non, dans ce cas elle aboutit dans le collecteur selon un angle par rapport à la verticale. La totalité du syngas collecté dans les différents collecteurs 32 est ensuite récupérée dans le collecteur transversal 33 auquel les différents collecteurs 32 du reformeur sont raccordés. Le collecteur transversal 33 achemine ainsi le syngas produit dans l'ensemble des tubes vers la suite du procédé. Dans la configuration illustrée sur la figure, le collecteur transversal 33 est positionné à une extrémité des collecteurs longitudinaux, chaque collecteur longitudinal 32 a donc une extrémité débouchant dans le collecteur transversal 33, son autre extrémité (non représentée) étant fermée par une bride.

La figure 4 illustre un système de mesure multipoint selon l'invention. Le moyen de mesure 40 équipant un dispositif de collecte de syngas du type de celui de la figure précédente pour la collecte du syngas produit par cinq tubes. Le moyen de mesure 40 est disposé dans le collecteur 32 où, pour chacun des tubes dont on veut déterminer la température de syngas en sortie de tube - c'est à dire dans l'exemple de la figure pour quatre tubes, on ne réalise pas de mesure pour le 2eme tube à partir de la gauche sur la figure - le système acquiert les données au moyen des capteurs 41 positionnés dans le syngas à la sortie des tubes. Cette première partie du moyen de mesure comprend quatre capteurs de température en surface, positionnés dans le gaz de synthèse au sortir des tubes dont on mesure la température du gaz de synthèse en sortie de tube. Le moyen de mesure 40 se prolonge au delà de cette première partie par une deuxième partie qui a pour fonction de transporter l'ensemble des données acquises au delà de la zone de mesure, d'abord dans le collecteur 32, puis en passant dans le collecteur transversal 33 et en traversant la paroi du collecteur transversal 33 vers l'extérieur (solution illustrée par la figure); une solution alternative consisterait à traverser la bride 48 (solution non illustrée par la figure). Dans tous les cas, il faut veiller à ce que l'étanchéité soit assurée lors de la traversée de la paroi ou de la bride. Considérant la solution représentée sur la figure, la deuxième partie du système traverse la paroi du collecteur transversal via un moyen de piquage 44 soudé en 45 au collecteur. Le collecteur étant soumis à des conditions sévères de pression (environ 30 bars) et de température (supérieure à 800°C) et à un environnement riche en hydrogène et monoxyde de carbone, un moyen 42 assure l'étanchéité lors de la traversée de la paroi par le système de mesure multipoint. Au delà, les conditions (pression, température, composition) sont celles de l'atmosphère extérieure, et lemoyen de mesure multipoint peut être relié en toute sécurité via un câble 47 de transfert jusqu'à l'instrumentation 43 placée à distance, par exemple dans la salle de contrôle de l'installation où les températures pourront être visualisées. Ce câble de transfert pourra lorsque les dimensions de l'installation le requièrent avoir une longueur de l'ordre de 100 m ou plus. Une instrumentation adéquate (du type convertisseur ou interrogateur connu en tant que tel) dotée d'une interface adaptée, convertira l'information mesurée par les capteurs en une mesure de température.

On notera aussi qu'il est possible en particulier dans les cas d'utilisation de thermocouples d'utiliser une pluralité de moyens indépendants au lieu d'un système multipoint, cette solution n'ayant cependant d'intérêt que si le nombre de thermocouples indépendants à installer dans le collecteur est faible, c'est à dire pour des reformeurs dont le nombre de tubes (à équiper) par rangées est limité, l'encombrement d'un dispositif utilisant des thermocouples indépendants devenant excessif si le nombre de thermocouples à installer par rangée augmente. Pour les fours de reformage de grande taille, on privilégiera ainsi le système multipoint, sauf dans le cas où on ne veut connaître la température de syngas en sortie de tubes que pour un nombre très limité de tubes.

Il est aussi possible d'installer dans un collecteur longitudinal plusieurs systèmes de mesure multipoints.Par exemple, pour des rangés longues dont on veut équiper un nombre important des tubes, il pourra être intéressant d'installer deux systèmes ou plus sur une même rangée afin de limiter l'encombrement et la longueur de la partie porteuse de capteurs.

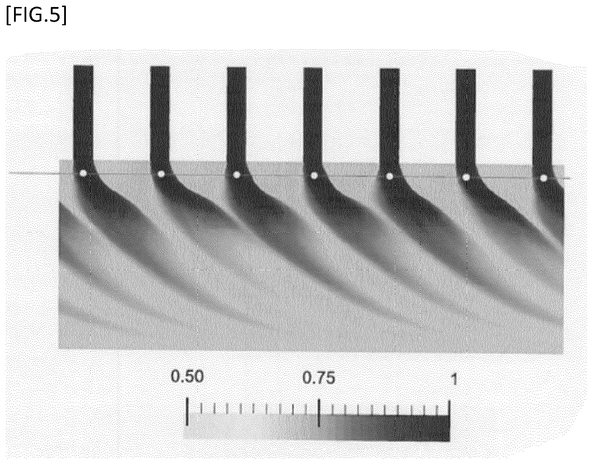

La figure 5 représente les résultats d'une simulation du comportement du gaz de synthèse en sortie des tubes, réalisée afin de déterminer la position par rapport au débouché d'un tube dans le collecteur à laquelle un capteur devait être disposé pour recueillir dans le fluide circulant à cet endroit des données représentatives du syngas sortant du tube - c'est à dire sans qu'il y ait préalablement eu mélange du gaz de synthèse sortant du tube avec celui issu des tubes voisins et/ou circulant dans le collecteur. L'objectif de la simulation était donc de mettre en évidence dans le collecteur en sortie de tube une zone dans laquelle le gaz de synthèse sortant du tube ne s'est pas encore mélangé au gaz de synthèse en provenance des autres tubes; la simulation met ainsi en évidence une zone où la température mesurée sera celle du gaz de synthèse au débouché du tube dans le collecteur. C'est à cet endroit que sera positionné le capteur.

Pour cela, une simulation du comportement du syngas en sortie des tubes dans des conditions correspondant à celles d'un four en opération a été réalisée pour une rangée de 29 tubes (seuls sept tubes sont représentés sur la figure). Afin que la mesure de température selon l'invention soit pertinente, l'endroit retenu pour y placer le capteur doit correspondre au coeur du j et généré par l'écoulement du gaz sortant du tube, là où le jet de gaz sortant du tube n'est pas perturbé par son environnement. Afin d'identifier la zone correspondante, on a injecté un traceur (sa présence est mise en évidence par la couleur noire sur la figure) à l'entrée des tubes et observé le comportement du traceur à la sortie des tubes, de sorte à mettre en évidence l'existence d'une zone de non-mélange des fluides dans le collecteur à proximité immédiate de la sortie du tube, là où le traceur ne s'était pas encore mélangé avec le gaz présent dans le collecteur. Le traceur permet ainsi de visualiser l'origine du gaz de synthèse.

On voit ainsi sur la figure que pour chacun des tubes représentés, le gaz de synthèse sortant du tube (en noir sur la figure) tend à ne pas se mélanger rapidement avec le gaz de synthèse issu des tubes voisins; pour chacun des tubes, les flux de gaz, après avoir coulé dans un premier temps et sur une première distance dans l'axe du tube, sont ensuite entraînés et de façon comparable pour les différents tubes, mais sans se mélanger, dans la direction du courant total circulant dans le collecteur, l'ensemble des flux de gaz issus des tubes se mélangent ensuite au flux total circulant dans le collecteur, à distance des sorties des tubes.

Il ressort de cette simulation du comportement des courants de gaz de synthèse au débouché des tubes dans le collecteur que pour un tube de reformage donné, pour que le capteur placé dans le collecteur donne une mesure de température de syngas correspondant à celle du syngas sortant de ce dit tube, il doit être disposé dans le prolongement de l'axe de sortie de tube à son débouché dans le collecteur (par axe de sortie de tube, on entend axe parallèle aux parois du tube à son extrémité et passant par son centre), et à une distance inférieure ou égale à deux fois le diamètre du tube à son débouché dans le collecteur; l'axe de sortie du tube étant l'axe selon lequel le gaz s'écoule en pénétrant dans le collecteur.

Le diamètre à prendre en compte est le diamètre du tube (ou de la pièce de raccordement quand il y en a une) au débouché dans le collecteur et non celui du tube dans la partie contenant le catalyseur de reformage.

Par ailleurs, si la sortie de tube s'effectue via une pièce de raccordement qui aboutit dans le collecteur selon un angle par rapport à la verticale, la direction de "l'axe de sortie de tube" qui est aussi la direction du courant gazeux produit dans le tube à l'endroit où il pénètre dans le collecteur est définie par ce même angle et la distance de positionnement du capteur se mesure selon cette direction.

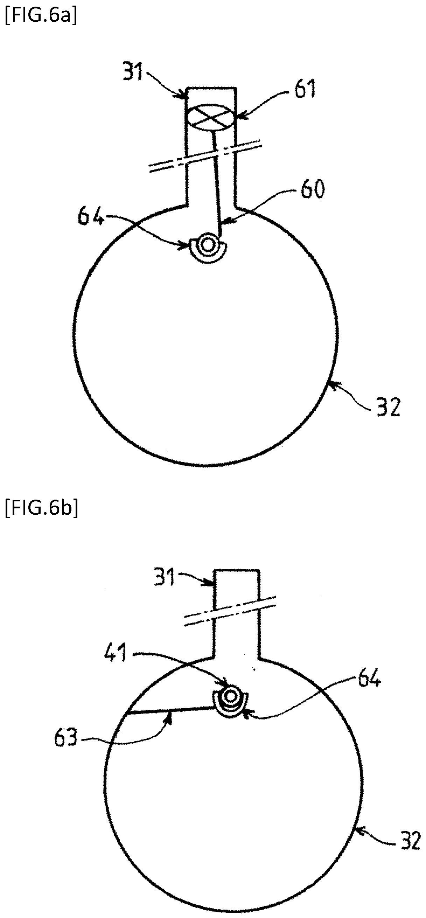

Les dessins de la figure 6 présentent deux exemples schématisés (a) et (b) de moyens de fixation du moyen de mesure dans le collecteur. Ces moyens de fixation assurent le positionnement de l'ensemble du moyen de mesure dans le collecteur, et en particulier positionne les différents capteurs de température au débouché des tubes de reformage, dans l'axe de sortie des tubes et à la distance choisie. Dans les exemples présentés, le capteur est disposé dans le collecteur 32 à la verticale de l'axe du tube dont il mesure la température de syngas en sortie de tube.

Dans l'exemple (a), le positionnement est assuré par un câble de fixation 60 (diamètre d'environ 2 à 3 mm) est relié au support du catalyseur 61 (moyen assurant le maintien du catalyseur dans le tube); il descend dans la pièce de raccordement 31 qui prolonge verticalement le tube de reformage jusqu'au collecteur (distance d'environ 1m à 1.5m), puis descend dans le collecteur longitudinal 32 sur une longueur maximale de 60 mm qui correspond à deux fois le diamètre interne de la pièce de raccordement (distance courte qui prévient le mélange du gaz de synthèse sortant du tube avec le gaz de synthèse du collecteur ou des tubes voisins). Le câble est muni à son extrémité d'un élément support 64 apte à recevoir et maintenir en position le moyen de mesure. L'exemple d'élément support présenté ici est en forme de crochet, le moyen de mesure étant fixé dans le creux dudit crochet. La fixation du système de mesure est réalisée de façon à assurer le bon positionnement de l'ensemble des capteurs 41 du système. Le câble peut être relié à toute autre pièce métallique présente dans le tube, ou fixé par soudage ou perçage à la paroi du tube ou de la pièce de raccordement au collecteur, dès lors que la longueur du câble est adaptée en conséquence et que le moyen de fixation (point de fixation au tube + câble combiné avec la géométrie de l'élément de fixation 64) assurent l'alignement du capteur 41 avec l'axe de sortie de tube. Ce mode de fixation à partir d'un point d'ancrage situé dans le tube (ou dans la pièce de raccordement) est particulièrement adapté dans le cas où le tube aboutit verticalement dans le collecteur. Dans les autres cas, le câble de fixation 60 devra être rigide et/ou maintenu de sorte à assurer le positionnement du capteur 41 dans l'axe de sortie de tube (rappelons que la forme de certaines pièces de raccordement conduit par exemple à une sortie de tube selon un axe horizontal).

Le moyen de mesure a une enveloppe externe présentant une enveloppe externe rigide, le nombre de points de fixation nécessaires pour assurer sa fixation dans le collecteur sera fonction de son poids. Chaque tube est apte à être équipé d'un moyen de fixation selon l'exemple (a), mais les tubes adjacents sont proches (la distance entre 2 tubes est d'environ 300 mm) et il n'est pas nécessaire d'avoir des points de fixation aussi rapprochés. En général les moyens de fixation pourront être espacés de un à plusieurs mètres sans remettre en cause la rigidité de l'ensemble.

Dans l'exemple (b) le moyen de mesure est fixé aux parois du collecteur. Plus précisément, la pièce de positionnement et ici un ensemble formé d'une pièce (pont) de liaison 63 reliant un point de la paroi interne du collecteur longitudinal à l'élément support 64 apte à recevoir et maintenir en position le moyen de mesure; l'élément de fixation 64 présenté est une pièce en forme de U, le système de mesure étant fixé dans le creux de ladite pièce (il ne s'agit là bien évidemment que d'un exemple de forme).

La liaison entre la paroi du collecteur et l'organe de fixation peut se faire à partir d'un point unique de la paroi du collecteur sous la forme d'un pont de soutien (pièce rigide de forme allongée reliant la paroi du collecteur à la pièce 64 recevant le système de mesure de section circulaire (ou autre) de diamètre (ou section) similaire au diamètre du système de mesure (soit de l'ordre de 5 mm pour un système avec thermocouple), ou à partir de plusieurs points, la section des pièces de liaison pouvant dans ce cas être plus petite. Si le collecteur est isolé thermiquement par l'intérieur, alors le pont de soutien 63 sera de préférence une (ou plusieurs) pièce(s) céramique fixée(s) à la paroi interne du collecteur 32 par une colle réfractaire haute température. Si le collecteur n'est pas isolé par l'intérieur, alors on fera appel à des éléments métalliques: le pont de soutien 63 sera une (ou plusieurs) pièce(s) métallique(s) (tuyau, barre, etc.) pouvant être soudé(s) directement à la paroi interne du collecteur.

De préférence, des ponts de soutien successifs seront positionnés en quinconce (un à gauche,un à droite), soit entre deux tubes ou plus espacés de 0.5 mètres à plusieurs mètres. On notera que ce mode de fixation est indépendant du mode de raccordement des tubes de reformage au collecteur, qu'il se fasse à la verticale du collecteur ou selon un angle par rapport à la verticale.

L'invention n'est pas limitée à cet arrangement dans lequel les tubes sont disposés en rangées parallèles, chacune étant reliée à un collecteur de syngas, elle pourra s'appliquer par exemple aux collecteurs de syngas des reformeurs de type cylindrique. Dans cette configuration (non représentée), les tubes de reformage placés verticalement selon un arrangement circulaire sont connectés à leur sortie à un collecteur unique en forme d'anneau. Le syngas est évacué via une canalisation de récupération. Le système de mesure de température selon l'invention peut être installé dans le collecteur circulaire de la même manière que dans un collecteur rectiligne, les mêmes moyens de positionnement des capteurs peuvent être utilisés. Le transfert des données mesurées à l'extérieur du collecteur peut se faire via une sortie étanche au travers d'une paroi du collecteur avec connection au câble de transfert comme précédemment décrit.

## Revendications

1. Système pour mesurer une température spécifique pour au moins un tube de reformage présent dans un four de reformage de méthane à la vapeur dans lequel:
• des tubes de reformage disposés verticalement en rangées sont alimentés en entrée en mélange gazeux réactionnel et produisent en sortie de tube un gaz de synthèse,
• un ensemble de collecteurs tubulaires longitudinaux est disposé dans un plan perpendiculaire aux rangées de tubes, sous lesdites rangées, pour collecter le gaz de synthèse produit, les tubes d'une rangée donnée débouchant dans un collecteur longitudinal qui lui est associé, l'ensemble des collecteurs longitudinaux débouchant dans un collecteur transversal, l'ensemble des collecteurs longitudinaux et collecteur transversal formant le système de collecte du gaz de synthèse,
**caractérisé en ce que** le système comprend pour au moins une rangée de tubes, au moins
• un moyen de mesure d'au moins une température de gaz de synthèse en sortie de tube, le moyen étant disposé dans la longueur du collecteur associé à ladite rangée de tubes et comprenant au moins:
∘ une première partie de forme tubulaire disposée dans la longueur dudit collecteur longitudinal et munie d'au moins un capteur de température pour acquérir des données de température, lequel capteur est positionné dans le gaz de synthèse au débouché d'un tube de reformage de la rangée dont on mesure la température du gaz de synthèse de sortie;
∘ une deuxième partie prolongeant la première partie apte à assurer le transfert des données de température acquises par le capteur vers l'extérieur du collecteur longitudinal, et jusqu'à la troisième partie,
∘ une troisième partie comprenant une instrumentation pour calculer la température à partir des données acquises par la première partie du moyen et transférées par la deuxième partie du moyen;
• un moyen de positionnement du capteur de température dans le collecteur longitudinal assurant son positionnement dans le flux de gaz de synthèse au débouché du tube, avant son mélange avec le gaz de synthèse provenant des autres tubes débouchant dans le collecteur ;
• un moyen étanche de sortie de la deuxième partie du moyen de mesure vers l'extérieur du système de collecte du gaz de synthèse.

2. Système de mesure selon la revendication 1 dans lequel pour au moins une rangée de tubes, le système comprend un ou plusieurs moyens de mesure dont la première partie est munie d'un capteur de température unique positionné au débouché d'un tube dont il mesure la température du gaz de synthèse de sortie à l'aide d'un moyen de positionnement dédié, dont la deuxième partie prolongeant la première partie et apte à assurer le transfert des données de température acquises par le capteur vers l'instrumentation dispose d'un moyen étanche de sortie vers l'extérieur du système de collecte du gaz de synthèse.

3. Système de mesure selon la revendication 1 dans lequel le moyen de mesure disposé dans la longueur du collecteur longitudinal est un moyen de mesure multipoint comportant une pluralité de capteurs disposés le long de la première partie du moyen de mesure pour se placer au débouché des tubes dont on mesure la température du gaz de synthèse de sortie.

4. Système de mesure selon l'une des revendications 1 à 3 dans lequel le capteur mesurant la température de gaz de synthèse en sortie d'un tube de reformage est positionné dans le collecteur, dans l'axe du tube à son débouché dans le collecteur, à une distance maximale mesurée à partir du débouché du tube dans le collecteur, de deux fois le diamètre intérieur de tube mesuré à son débouché dans le collecteur.

5. Système selon la revendication 4 **caractérisé en ce que** le positionnement des capteurs est assuré via une pluralité de moyens de fixation individuels répartis le long de la première partie du moyen de mesure de température qui assurent la fixation d'ensemble du moyen de mesure au collecteur au niveau de sa première partie.

6. Système selon la revendication 5 **caractérisé en ce que** les moyens de fixation individuels assurant la fixation d'ensemble comprennent un élément support sur lequel repose le moyen de mesure et une pièce de positionnement reliée rigidement à l'élément support et à au moins un point fixe du collecteur ou d'un tube de reformage débouchant dans le collecteur.

7. Système selon la revendication 6 dans lequel la pièce de positionnement est constituée d'une ou plusieurs pièces rigides qui relient l'élément support aux parois du collecteur assurent son centrage et son maintien en position.

8. Système selon la revendication 6 dans lequel le moyen de fixation est positionné au niveau d'une sortie de tube aboutissant verticalement dans le collecteur, la pièce de positionnement étant constituée d'un axe rigide solidaire du tube à son extrémité supérieure, par fixation à la paroi intérieure du tube ou à un élément lui-même solidaire du tube par exemple à un support de catalyseur, et à son extrémité inférieure solidaire d'un élément support sur lequel repose le moyen de mesure.

9. Système selon l'une des revendications précédentes dans lequel la deuxième partie du moyen de mesure sort vers l'extérieur du système de collecte du gaz de synthèse directement à partir d'une extrémité du collecteur longitudinal fermée par une bride, ladite bride étant munie du moyen étanche de sortie de la deuxième partie du moyen de mesure vers l'extérieur du système de collecte du gaz de synthèse.

10. Système selon l'une des revendications 1 à 8 dans lequel la deuxième partie du moyen de mesure sort vers l'extérieur du système de collecte du gaz de synthèse en passant par le collecteur transversal relié au collecteur longitudinal et en traversant la paroi du collecteur transversal, ladite paroi étant munie pour cette traversée d'un moyen étanche de sortie de la deuxième partie du moyen de mesure vers l'extérieur du système de collecte du gaz de synthèse.

11. Système selon l'une des revendications 1 ou 3 à 10 dans lequel le moyen de mesure de température est du type fibre optique muni d'un réseau de Bragg.

12. Système selon l'une des revendications 1 à 10 dans lequel le capteur de température utilisé est du type thermocouple.

13. Méthode pour mesurer une température spécifique pour au moins un tube de reformage mettant en oeuvre un système de mesure de température selon l'une quelconque des revendications précédentes, selon laquelle on mesure la température du gaz de synthèse en sortie d'au moins un tube de reformage d'au moins une rangée de tubes présents dans un four de reformage de méthane à la vapeur dans lequel :
• on alimente en hydrocarbure gazeux et vapeur d'eau des tubes de reformage disposés verticalement en rangées et
• on récupère en sortie basse des tubes ledit gaz de synthèse,
• on collecte le gaz de synthèse dans un collecteur longitudinal disposé sous la rangée de tubes qui lui est associé, l'ensemble des collecteurs longitudinaux débouchant dans un collecteur transversal,
**caractérisée en ce que** pour au moins un tube d'au moins une rangée de tubes, on mesure la température de gaz de synthèse en sortie de tube en mettant en oeuvre au moins
• un moyen de mesure disposé dans la longueur du collecteur associé à ladite rangée de tubes, lequel moyen comprend au moins :
o une première partie de forme tubulaire disposée dans la longueur dudit collecteur longitudinal et munie d'au moins un capteur de température pour acquérir des données de température, lequel capteur est positionné dans le gaz de synthèse au débouché d'un tube de reformage de la rangée dont on mesure la température du gaz de synthèse de sortie;
∘ une deuxième partie prolongeant la première partie apte à assurer le transfert des données de température acquises par le capteur vers l'extérieur du collecteur longitudinal, et jusqu'à la troisième partie,
∘ une troisième partie comprenant une instrumentation pour calculer la température à partir des données acquises par la première partie du moyen et transférées par la deuxième partie du moyen;
• un moyen de positionnement du capteur de température dans le collecteur longitudinal assurant son positionnement dans le flux de gaz de synthèse au débouché du tube, avant son mélange avec le gaz de synthèse provenant des autres tubes débouchant dans le collecteur ;
• un moyen étanche de sortie de la deuxième partie du moyen de mesure vers l'extérieur du système de collecte du gaz de synthèse.

## Patentansprüche

1. System zur Messung einer spezifischen Temperatur für mindestens ein Reformierungsrohr, das in einem Methan-Dampfreformierungsofen vorhanden ist, wobei:
• Reformierungsrohre, die vertikal in Reihen angeordnet sind, am Eingang mit Reaktionsgasgemisch gespeist werden und am Rohrausgang ein Synthesegas erzeugen,
• ein Satz von längs verlaufenden rohrförmigen Sammlern in einer zu den Reihen von Rohren senkrechten Ebene angeordnet ist, unter diesen Reihen, um das erzeugte Synthesegas zu sammeln, wobei die Rohre einer gegebenen Reihe in einen längs verlaufenden Sammler münden, der ihr zugeordnet ist, wobei der Satz der längs verlaufenden Sammler in einen quer verlaufenden Sammler mündet, wobei der Satz der längs verlaufenden Sammler und der quer verlaufende Sammler das Sammelsystem des Synthesegases bilden,
**dadurch gekennzeichnet, dass** das System für mindestens eine Reihe von Rohren mindestens umfasst:
• ein Messmittel für mindestens eine Temperatur von aus dem Rohr austretendem Synthesegas, wobei das Mittel in der Länge des dieser Reihe von Rohren zugeordneten Sammlers angeordnet ist und mindestens umfasst:
o einen ersten Teil von rohrförmiger Gestalt, der in der Länge des längs verlaufenden Sammlers angeordnet ist und mit mindestens einem Temperatursensor ausgestattet ist, um Temperaturdaten zu erfassen, wobei dieser Sensor im Synthesegas an der Mündung eines Reformierungsrohres der Reihe positioniert ist, von dem die Temperatur des austretenden Synthesegases gemessen wird;
o einen den ersten Teil verlängernden zweiten Teil, der geeignet ist, die Übertragung der von dem Sensor erfassten Temperaturdaten aus dem längs verlaufenden Sammler hinaus und bis zum dritten Teil sicherzustellen;
o einen dritten Teil, der Instrumente zum Berechnen der Temperatur aus den Daten umfasst, die vom ersten Teil des Mittels erfasst und vom zweiten Teil des Mittels übertragen wurden;
• ein Mittel zur Positionierung des Temperatursensors in dem längs verlaufenden Sammler, das seine Positionierung in dem Strom von Synthesegas an der Mündung des Rohres sicherstellt, bevor seine Mischung mit dem von den anderen in den Sammler mündenden Rohren kommenden Synthesegas erfolgt;
• ein dichtes Austrittsmittel des zweiten Teils des Messmittels zur Außenseite des Sammelsystems des Synthesegases hin.

2. System zur Messung nach Anspruch 1, wobei das System für mindestens eine Reihe von Rohren ein oder mehrere Messmittel umfasst, von denen der erste Teil mit einem einzigen Temperatursensor ausgestattet ist, der an der Mündung eines Rohres, von dem er die Temperatur des austretenden Synthesegases misst, mithilfe eines dafür vorgesehenen Positionierungsmittels positioniert ist, und von denen der zweite Teil, der den ersten verlängert und geeignet ist, die Übertragung der von dem Sensor erfassten Temperaturdaten zu den Instrumenten sicherzustellen, über ein dichtes Austrittsmittel zur Außenseite des Sammelsystems des Synthesegases hin verfügt.

3. System zur Messung nach Anspruch 1, wobei das in der Länge des längs verlaufenden Sammlers angeordnete Messmittel ein Mittel zur Mehrpunktmessung ist, das mehrere Sensoren aufweist, die entlang des ersten Teils des Messmittels angeordnet sind, um an den Mündungen der Rohre platziert zu werden, von denen die Temperatur des austretenden Synthesegases gemessen wird.

4. System zur Messung nach einem der Ansprüche 1 bis 3, wobei der Sensor, der die Temperatur des aus einem Reformierungsrohr austretenden Synthesegases misst, in dem Sammler in der Achse des Rohres an seiner Mündung in den Sammler in einem von der Mündung des Rohres in den Sammler aus gemessenen maximalen Abstand positioniert ist, der gleich dem Zweifachen des an seiner Mündung in den Sammler gemessenen Innendurchmessers des Rohres ist.

5. System nach Anspruch 4, **dadurch gekennzeichnet, dass** die Positionierung der Sensoren über mehrere entlang des ersten Teils des Temperaturmessmittels verteilte einzelne Befestigungsmittel sichergestellt ist, welche die Gesamtbefestigung des Messmittels am Sammler an seinem ersten Teil sicherstellen.

6. System nach Anspruch 5, **dadurch gekennzeichnet, dass** die einzelnen Befestigungsmittel, welche die Gesamtbefestigung sicherstellen, ein Stützelement, auf dem das Messmittel ruht, und ein Positionierungsteil, das starr mit dem Stützelement und mit mindestens einem festen Punkt des Sammlers oder eines in den Sammler mündenden Reformierungsrohres verbunden ist, umfassen.

7. System nach Anspruch 6, wobei das Positionierungsteil aus einem oder mehreren starren Teilen besteht, die das Stützelement mit den Wänden des Sammlers verbinden und so seine Zentrierung und sein Halten in Position sicherstellen.

8. System nach Anspruch 6, wobei das Befestigungsmittel an einem vertikal in den Sammler führenden Rohrausgang positioniert ist, wobei das Positionierungsteil aus einer starren Achse besteht, die an ihrem oberen Ende mit dem Rohr durch Befestigung an der Innenwand des Rohres oder an einem seinerseits mit dem Rohr fest verbundenen Element, zum Beispiel an einer Katalysatorhalterung, fest verbunden ist und an ihrem unteren Ende mit einem Stützelement, auf dem das Messmittel ruht, fest verbunden ist.

9. System nach einem der vorhergehenden Ansprüche, wobei der zweite Teil des Messmittels zur Außenseite des Sammelsystems des Synthesegases direkt von einem Ende des längs verlaufenden Sammlers aus austritt, das durch einen Flansch verschlossen ist, wobei der Flansch mit dem dichten Austrittsmittel des zweiten Teils des Messmittels zur Außenseite des Sammelsystems des Synthesegases hin ausgestattet ist.

10. System nach einem der Ansprüche 1 bis 8, wobei der zweite Teil des Messmittels zur Außenseite des Sammelsystems des Synthesegases austritt, indem er durch den quer verlaufenden Sammler verläuft, der mit dem längs verlaufenden Sammler verbunden ist, und indem er die Wand des quer verlaufenden Sammlers durchquert, wobei diese Wand für diese Durchführung mit einem dichten Austrittsmittel des zweiten Teils des Messmittels zur Außenseite des Sammelsystems des Synthesegases hin ausgestattet ist.

11. System nach einem der Ansprüche 1 oder 3 bis 10, wobei das Temperaturmessmittel vom Typ eines mit einem Bragg-Gitter ausgestatteten Lichtwellenleiters ist.

12. System nach einem der Ansprüche 1 bis 10, wobei der verwendete Temperatursensor vom Typ eines Thermoelements ist.

13. Verfahren zur Messung einer spezifischen Temperatur für mindestens ein Reformierungsrohr, bei dem ein System zur Temperaturmessung nach einem der vorhergehenden Ansprüche eingesetzt wird und gemäß dem die Temperatur des Synthesegases am Ausgang mindestens eines Reformierungsrohres mindestens einer Reihe von Rohren, die in einem Methan-Dampfreformierungsofen vorhanden sind, gemessen wird, wobei:
• Reformierungsrohre, die vertikal in Reihen angeordnet sind, mit gasförmigem Kohlenwasserstoff und Wasserdampf gespeist werden und
• am unteren Ausgang der Rohre das Synthesegas rückgewonnen wird,
• das Synthesegas in einem längs verlaufenden Sammler gesammelt wird, der unter der Reihe von Rohren angeordnet ist, die ihm zugeordnet ist, wobei der Satz der längs verlaufenden Sammler in einen quer verlaufenden Sammler mündet,
**dadurch gekennzeichnet, dass** für mindestens ein Rohr mindestens einer Reihe von Rohren Temperatur des aus dem Rohr austretenden Synthesegases gemessen wird, indem mindestens eingesetzt werden:
• ein Messmittel, das in der Länge des der Reihe von Rohren zugeordneten Sammlers angeordnet ist, wobei das Mittel mindestens umfasst:
o einen ersten Teil von rohrförmiger Gestalt, der in der Länge des längs verlaufenden Sammlers angeordnet ist und mit mindestens einem Temperatursensor ausgestattet ist, um Temperaturdaten zu erfassen, wobei dieser Sensor im Synthesegas an der Mündung eines Reformierungsrohres der Reihe positioniert ist, von dem die Temperatur des austretenden Synthesegases gemessen wird;
o einen den ersten Teil verlängernden zweiten Teil, der geeignet ist, die Übertragung der von dem Sensor erfassten Temperaturdaten aus dem längs verlaufenden Sammler hinaus und bis zum dritten Teil sicherzustellen;
o einen dritten Teil, der Instrumente zum Berechnen der Temperatur aus den Daten umfasst, die vom ersten Teil des Mittels erfasst und vom zweiten Teil des Mittels übertragen wurden;
• ein Mittel zur Positionierung des Temperatursensors in dem längs verlaufenden Sammler, das seine Positionierung in dem Strom von Synthesegas an der Mündung des Rohres sicherstellt, bevor seine Mischung mit dem von den anderen in den Sammler mündenden Rohren kommenden Synthesegas erfolgt;
• ein dichtes Austrittsmittel des zweiten Teils des Messmittels zur Außenseite des Sammelsystems des Synthesegases hin.

## Claims

1. System for measuring a specific temperature for at least one reforming tube present in a steam methane reforming furnace in which:
• reforming tubes disposed vertically in rows are supplied at the inlet with a gaseous reaction mixture and produce a synthesis gas at the tube outlet,
• a set of longitudinal tubular manifolds is disposed in a plane perpendicular to the rows of tubes, beneath said rows, so as to collect the synthesis gas produced, the tubes of a given row opening into a longitudinal manifold that is associated therewith, all the longitudinal manifolds opening into a transverse manifold, all the longitudinal manifolds and the transverse manifold forming the system for collecting the synthesis gas,
**characterized in that** the system comprises, for at least one row of tubes, at least
• a means for measuring at least one synthesis gas temperature at the tube outlet, the means being disposed along the length of the manifold associated with said row of tubes and comprising at least:
o a first part of tubular shape disposed along the length of said longitudinal manifold and provided with at least one temperature sensor so as to acquire temperature data, which sensor is positioned in the synthesis gas at the mouth of a reforming tube of the row of which the temperature of the outlet synthesis gas is measured;
o a second part extending the first part that is able to ensure the transfer of the temperature data acquired by the sensor to the outside of the longitudinal manifold, and as far as the third part;
o a third part comprising instrumentation for calculating the temperature from the data acquired by the first part of the means and transferred by the second part of the means;
• a means for positioning the temperature sensor in the longitudinal manifold that ensures its positioning in the flow of synthesis gas at the mouth of the tube, before it is mixed with the synthesis gas coming from the other tubes opening into the manifold;
• a sealed outlet means for the second part of the measurement means towards the outside of the system for collecting the synthesis gas.

2. Measurement system according to Claim 1, in which, for at least one row of tubes, the system comprises one or more measurement means of which the first part is provided with a single temperature sensor positioned at the mouth of a tube of which it measures the temperature of the outlet synthesis gas using a dedicated positioning means and of which the second part extending the first part and able to ensure the transfer of the temperature data acquired by the sensor to the instrumentation has a sealed outlet means towards the outside of the system for collecting the synthesis gas.

3. Measurement system according to Claim 1, in which the measurement means disposed along the length of the longitudinal manifold is a multipoint measurement means having a plurality of sensors disposed along the first part of the measurement means so as to be placed at the mouth of the tubes of which the temperature of the outlet synthesis gas is measured.

4. Measurement system according to one of Claims 1 to 3, in which the sensor measuring the synthesis gas temperature at the outlet of a reforming tube is positioned in the manifold, along the axis of the tube where it opens into the manifold, at a maximum distance, measured from where the tube opens into the manifold, of twice the inner diameter of the tube measured where it opens into the manifold.

5. System according to Claim 4, **characterized in that** the positioning of the sensors is ensured via a plurality of individual fastening means distributed along the first part of the temperature measurement means that ensure the overall fastening of the measurement means to the manifold at its first part.

6. System according to Claim 5, **characterized in that** the individual fastening means that ensure the overall fastening comprise a support element on which the measurement means rests and a positioning piece rigidly connected to the support element and to at least one fixed point of the manifold or of a reforming tube opening into the manifold.

7. System according to Claim 6, in which the positioning piece is constituted of one or more rigid pieces that connect the support element to the walls of the manifold and ensure it is centred and held in position.

8. System according to Claim 6, in which the fastening means is positioned at a tube outlet terminating vertically in the manifold, the positioning piece being constituted of a rigid shaft secured to the tube at its upper end, by fastening to the inner wall of the tube or to an element itself secured to the tube, for example to a catalyst support, and at its lower end secured to a support element on which the measurement means rests.

9. System according to one of the preceding claims, in which the second part of the measurement means exits towards the outside of the system for collecting the synthesis gas directly from an end of the longitudinal manifold that is closed by a flange, said flange being provided with the sealed outlet means for the second part of the measurement means towards the outside of the system for collecting the synthesis gas.

10. System according to one of Claims 1 to 8, in which the second part of the measurement means exits towards the outside of the system for collecting the synthesis gas, passing via the transverse manifold connected to the longitudinal manifold and through the wall of the transverse manifold, said wall being provided, for this passage, with a sealed outlet means for the second part of the measurement means towards the outside of the system for collecting the synthesis gas.

11. System according to one of Claims 1 or 3 to 10, in which the temperature measurement means is of the fibre Bragg grating type.

12. System according to one of Claims 1 to 10, in which the temperature sensor used is of the thermocouple type.

13. Method for measuring a specific temperature for at least one reforming tube implementing a temperature measurement system according to any one of the preceding claims, according to which the temperature of the synthesis gas at the outlet of at least one reforming tube of at least one row of tubes present in a steam methane reforming furnace is measured, in which:
• reforming tubes disposed vertically in rows are supplied with gaseous hydrocarbon and steam and
• said synthesis gas is recovered at the bottom outlet of the tubes,
• the synthesis gas is collected in a longitudinal manifold disposed beneath the row of tubes that is associated therewith, all the longitudinal manifolds opening into a transverse manifold,
**characterized in that**, for at least one tube of at least one row of tubes, the synthesis gas temperature at the tube outlet is measured by implementing at least
• a measurement means disposed along the length of the manifold associated with said row of tubes, which means comprises at least:
o a first part of tubular shape disposed along the length of said longitudinal manifold and provided with at least one temperature sensor so as to acquire temperature data, which sensor is positioned in the synthesis gas at the mouth of a reforming tube of the row of which the temperature of the outlet synthesis gas is measured;
o a second part extending the first part that is able to ensure the transfer of the temperature data acquired by the sensor to the outside of the longitudinal manifold, and as far as the third part;
o a third part comprising instrumentation for calculating the temperature from the data acquired by the first part of the means and transferred by the second part of the means;
• a means for positioning the temperature sensor in the longitudinal manifold that ensures its positioning in the flow of synthesis gas at the mouth of the tube, before it is mixed with the synthesis gas coming from the other tubes opening into the manifold;
• a sealed outlet means for the second part of the measurement means towards the outside of the system for collecting the synthesis gas.
